# EUROPÄISCHE PATENTANMELDUNG

(11) **EP 4 484 042 A1**
(43) Veröffentlichungstag der Anmeldung: **01.01.2025**
(21) Anmeldenummer: 23181690.1
(22) Anmeldetag: 27.06.2023
(51) Int. Cl.: B23G 1/18, B23G 3/02, B23G 11/00

(54) **VERFAHREN UND ELEKTROWERKZEUG ZUM GEWINDEFORMEN**

(71) Anmelder: Hilti Aktiengesellschaft, 9494 Schaan (LI)
(72) Erfinder: Langer, Matthias, 86856 Hiltenfingen (DE); Schrenk, Werner, 86830 Schwabmünchen (DE); Schubert, Wolfgang, 86899 Landsberg (DE); Wörz, Joachim, 86929 Penzing (DE); Wachter, Tobias, 96337 Ludwigsstadt (DE)
(74) Vertreter: Hilti Aktiengesellschaft Corporate Intellectual Property

(57) **Zusammenfassung**

Verfahren zum Gewindeformen mit einem Elektrowerkzeug (1) umfassend folgende Schritte: Schneiden (S1) eines Gewindes (24) an einem Werkstück (21) durch Drehen eines Gewindeschneiders (20, 28) mit einem Elektromotor in eine erste Drehrichtung (DR); Bestimmen (S2) eines Drehmoments, mit dem der Gewindeschneider (20, 28) gedreht wird; Ermitteln (S3) eines Erreichens eines Drehrichtungsumkehrwertes aus dem Drehmoment; Ändern (S4) der ersten Drehrichtung (DR) in eine zweite, zur ersten Drehrichtung (DR) entgegengesetzte, Drehrichtung (DR) nach Erreichen des Drehrichtungsumkehrwertes, und Drehen (S5) des Gewindeschneiders (20, 28) mit dem Elektromotor in die zweite Drehrichtung (DR) zum Entfernen des Gewindeschneiders (20, 28) von dem Werkstück (21).

## Beschreibung

### GEBIET DER ERFINDUNG

Die vorliegende Erfindung betrifft ein Verfahren und ein Elektrowerkzeug zum Gewindeformen. Die vorliegende Erfindung betrifft ferner ein Computerprogrammprodukt.

Gewinde können an Werkstücken mit Gewindebohrern oder Schneideisen mit Hilfe eines Windeisens von Hand geschnitten werden. Maschinell können Gewinde z.B. mit einer Drehbank, oder mit Elektrowerkzeugen wie Bohrmaschinen oder Akkubohrschraubern oder mit speziellen Gewindebohrmaschinen geformt werden.

Durch Drehen eines Gewindebohrers mit einem Akkubohrschrauber kann z.B. in einem vorgeformten Loch in einem Werkstück ein Innengewinde geformt werden. Durch das Drehen des Gewindebohrers "schraubt" sich der Gewindebohrer in das Loch und schneidet dabei das Gewinde. Um den Gewindebohrer aus dem so geformten Gewinde zu entfernen, wird händisch die Drehrichtung des Akkubohrschraubers geändert und der Gewindebohrer schraubt sich aus dem Gewinde wieder heraus.

Aus der CH179171 ist eine Gewindeschneidvorrichtung für Revolverdrehbänke bekannt, bei der die Drehrichtung der Arbeitsspindel umkehrbar ist. Ein Schaft mit einem Gewindeschneidzeug hat eine Kupplung. Ist eine voreingestellte Länge des Gewindes erreicht, so löst ein Stellring mechanisch die Kupplung und Steuerflächen am Stellring erzwingen einen Rücklauf des Schafts.

Vor diesem Hintergrund besteht eine Aufgabe der vorliegenden Erfindung darin, ein verbessertes Verfahren und eine verbesserte Vorrichtung zum Gewindeschneiden zur Verfügung zu stellen.

### OFFENBARUNG DER ERFINDUNG

Demgemäß wird ein Verfahren zum Gewindeformen mit einem Elektrowerkzeug vorgeschlagen, wobei das Verfahren folgende Schritte umfasst: Schneiden eines Gewindes an einem Werkstück durch Drehen eines Gewindeschneiders mit einem Elektromotor in eine erste Drehrichtung; Bestimmen eines Drehmoments, das durch den Elektromotor auf den Gewindeschneider ausgeübt wird; Ermitteln eines Erreichens eines Drehrichtungsumkehrwertes aus dem Drehmoment; Ändern der ersten Drehrichtung in eine zweite, zur ersten Drehrichtung entgegengesetzte, Drehrichtung nach Erreichen des Drehrichtungsumkehrwertes; und Drehen des Gewindeschneiders mit dem Elektromotor in die zweite Drehrichtung zum Entfernen des Gewindeschneiders von dem Werkstück.

Eine automatische Änderung der Drehrichtung und das darauffolgende Drehen des Gewindeschneiders in der zweiten Drehrichtung ermöglicht das effiziente Formen von Gewinden, da der Gewindeschneider nach dem Schneiden des Gewindes automatisch vom Werkstück entfernt werden kann und so für einen weiteren Gewindeformvorgang wieder zur Verfügung steht. So können schnell hintereinander eine Mehrzahl von Gewinden geformt werden.

Das Verfahren zum Gewindeformen kann als Zusatzfunktion bei Bohrmaschinen oder Bohrschraubern implementiert werden. Das Verfahren kann auch mit speziell dafür vorgesehenen Gewindebohrmaschinen durchgeführt werden. Die Bohrmaschinen, Bohrschrauber oder Gewindebohrmaschinen können netzgebunden oder akkubetrieben sein.

Bei einem Innengewinde wird durch Drehen eines Gewindebohrers in ein Kernloch das Gewinde geschnitten. Hierzu kann z.B. ein Einschnittgewindebohrer, angetrieben von einem Akkubohrschrauber, das Gewinde schneiden. Bei einem Außengewinde wird ein Schneideisen um einen, meist zylindrischen, Abschnitt eines Werkstücks gedreht und so das Gewinde an dem Werkstück geschnitten. Für das Schneiden des Gewindes kann eine Anzahl von Umdrehungen pro Zeiteinheit für den Gewindeschneider festgelegt werden und mit dem Elektromotor kann im Betrieb versucht werden, diese Anzahl von Umdrehungen pro Zeiteinheit konstant zu halten, z.B. durch eine Steuerung des Elektromotors.

Das Drehmoment, mit dem der Gewindeschneider gedreht wird, kann z.B. an einer Welle, die den Gewindeschneider antreibt, bestimmt werden. Ist der Gewindeschneider, z.B. über ein Spannfutter, an der Welle befestigt, so wird auf diese Weise das Drehmoment, mit dem der Gewindeschneider gedreht wird, unmittelbar bestimmt. Das Drehmoment kann z.B. mit einem Drehmomentsensor in der Welle, z.B. einem aktiven magnetisch-induktiven Drehmomentsensor, bestimmt werden. Das Drehmoment kann auch mit Hilfe des Elektromotors oder am Elektromotor bestimmt werden. Das Drehmoment, mit dem der Gewindeschneider gedreht wird, kann dabei mit Hilfe von Messwerten und Kenngrößen des Elektromotors, der über einen Antriebsstrang den Gewindeschneider dreht, mittelbar bestimmt werden. Das Drehmoment, das auf den Gewindeschneider ausgeübt wird, umfasst das Drehmoment, mit dem der Gewindeschneider gedreht wird und auch den statischen Grenzfall, dass sich der Gewindeschneider nicht mehr oder kaum mehr dreht und das Drehmoment am Gewindeschneider anliegt.

Wird das Gewinde in einem Sackloch geformt, so kann das Drehmoment, mit dem der Gewindeschneider gedreht wird, zunehmen, wenn ein Vorsprung an der Spitze des Gewindebohrers den Boden des Sacklochs erreicht. Bei Akkuschraubern mit Drehmomentbegrenzung wird dann z.B. auch eine Rutschkupplung ausgelöst. Aus dem Drehmoment kann ermittelt werden, ob ein Drehrichtungsumkehrwert erreicht ist.

Nach Erreichen des Drehrichtungsumkehrwerts kann, ohne Eingriff eines Bedieners, die Drehrichtung des Gewindeschneiders umgekehrt werden. Der Gewindeschneider wird dadurch vom Werkstück wieder entfernt, z.B. schraubt sich der Gewindebohrer aus dem Kernloch wieder heraus oder ein Schneideisen wird vom Werkstück abgeschraubt. Der Bediener muss die Drehrichtung nicht durch einen Schalter ändern und kann in einem flüssigen Arbeitsvorgang das Gewinde schneiden und den Gewindeschneider vom Werkstück entfernen. Auf diese Weise kann eine Vielzahl von Gewinden in kurzer Zeit geformt werden, insbesondere eine Vielzahl von gleichartigen Gewinden.

In einer Ausführungsform wird für das Bestimmen des Drehmoments eine Stromstärke eines den Elektromotor anregenden Stroms und/oder eine Anzahl von Umdrehungen pro Zeiteinheit des Gewindeschneiders bestimmt.

In bekannter Weise kann aus den Kennlinien des Elektromotors das Drehmoment des Elektromotors in Abhängigkeit von der Stromstärke bestimmt werden. Ist im Antriebsstrang des Gewindeschneiders ein Getriebe, so kann zusätzlich die Umdrehungszahl des Gewindeschneiders verwendet werden, um insbesondere bei mehreren Übersetzungen des Getriebes, dem Drehmoment des Elektromotors das Drehmoment des Gewindeschneiders zuordnen zu können.

In einer Ausführungsform wird für die Bestimmung der Umdrehungen pro Zeiteinheit des Gewindeschneiders die Stellung, z.B. der Gang, des Getriebes, insbesondere mit einem Hallsensor, die Umdrehungen pro Zeiteinheit der den Gewindeschneider antreibenden Welle, insbesondere mit einem Hallsensor, und/oder die Umdrehungen pro Zeiteinheit des Elektromotors, insbesondere mit einem Hallsensor, gemessen.

Bei dem Getriebe kann die Übersetzung der Umdrehungen pro Zeiteinheit des Elektromotors in Umdrehungen pro Zeiteinheit des Gewindeschneiders aus der Stellung des Getriebes bestimmt werden. Die Einstellung des Getriebes kann in bekannter Weise mit einem Hallsensor gemessen werden. Es kann auch an der Welle, die den Gewindeschneider dreht, wenn kein Getriebe zwischen der Welle und dem Gewindeschneider vorhanden ist, die Anzahl der Umdrehungen pro Zeiteinheit gemessen werden. Auch diese Messung kann in bekannter Weise mit einem Hallsensor vorgenommen, z.B. mit einem an der Welle angebrachten Magneten, der bei jeder Drehung der Welle im Hallsensor ein Signal erzeugt, werden. Auch am Elektromotor kann die Zahl der Umdrehungen pro Zeiteinheit, insbesondere mit einem Hallsensor, gemessen werden. Hier können auch Magnetfeldänderungen durch ein Magnetfeld des Elektromotors genutzt werden.

In einer Ausführungsform wird das Erreichen des Drehrichtungsumkehrwertes aus einem Überschreiten eines Drehmomentschwellwerts für das Drehmoment, das auf den Gewindeschneider ausgeübt wird, ermittelt.

Ein einfaches Kriterium für das Ändern der Drehrichtung des Gewindeschneiders kann ein Schwellwert für das am Gewindeschneider anliegende Drehmoment sein. Wird dieser Schwellwert überschritten, so wird die Drehrichtung geändert. Ein solcher Schwellwert kann z.B. einstellbar sein. Als Drehmomentschwellwert kann z.B. auch die Stromstärke des Elektromotors verwendet werden, von der in bekannter Weise das Drehmoment des Elektromotors abhängt und die damit mittelbar das Drehmoment, mit dem der Gewindeschneider gedreht wird, abbildet.

In einer Ausführungsform wird das Erreichen des Drehmomentumkehrwertes aus einem Überschreiten eines Anstiegsschwellwerts eines zeitlichen und/oder drehwinkelabhängigen Ansteigens des Drehmoments ermittelt.

Aus der Ableitung der Drehmomentkurve in Abhängigkeit von Zeit und/oder Drehwinkel kann ein Wert bestimmt werden, aus dem ein Erreichen des Drehmomentumkehrwertes ermittelt werden kann. Trifft zum Beispiel der Vorsprung des Gewindebohrers auf den Boden eines Sacklochs, so steigt das Drehmoment, das am Gewindeschneider anliegt, stark an. Liegt diese Steigung über einem Anstiegsschwellwert, so kann die Drehrichtung geändert werden. Der Anstieg des Drehmoments, das auf den Gewindeschneider ausgeübt wird, kann z.B. durch einen Anstieg der Stromstärke des Elektromotors repräsentiert sein.

In einer Ausführungsform erfolgt das Ändern der ersten Drehrichtung in die zweite Drehrichtung durch eine Änderung einer Stromrichtung am Elektromotor, eine Änderung einer Phasensequenz am Elektromotor oder eine Getriebeumschaltung.

Die Änderung der Drehrichtung des Gewindeschneiders, um den Gewindeschneider vom Werkstück zu entfernen, kann durch mechanische Schaltvorgänge, z.B. in einem Getriebe vorgenommen werden. Die mechanischen Schaltvorgänge können elektronisch durch einen Aktuator ausgelöst werden, z.B. einen Stellmotor. Änderungen im Bereich der Ansteuerung des Elektromotors bieten eine Möglichkeit ohne mechanische Eingriffe im Antriebsstrang die Drehrichtung umzukehren. Z.B. kann die Phasensequenz des Stroms für die Anregung des Elektromotors geändert werden oder die Stromrichtung, mit der der Elektromotor angetrieben wird, kann geändert werden. Mit Hilfe einer elektronischen Steuerung kann der Elektromotor auch in definierter Weise abgebremst und beschleunigt werden, insbesondere auch mit festgelegten Drehmomenten, sodass eine für den Bediener angenehme Umschaltung der Drehrichtung des Gewindeschneiders vorgenommen wird.

In einer Ausführungsform dreht sich nach einem Ausschalten des Elektrowerkzeugs, insbesondere nach einem Loslassen und/oder Freigeben eines Betriebsschalters, der Elektromotor bei erneutem Einschalten des Elektrowerkzeugs wieder in die erste Drehrichtung.

Für eine rasche Folge mehrerer Gewindeformvorgänge kann das Verfahren nach dem Schneiden des Gewindes und dem Entfernen des Gewindeschneiders vom Werkstück zurückgesetzt werden, um dann wieder neu gestartet werden zu können. Der Bediener kann während des Verfahrens zum Gewindeformen den Betriebsschalter durchgedrückt lassen und lässt den Betriebsschalter erst nach dem Entfernen des Gewindeschneiders vom Werkstück wieder los. Hierdurch wird in einem Arbeitsschritt das Gewinde geformt, durch das Loslassen des Betriebsschalters wird die Drehrichtung zurückgesetzt und bei erneutem Drücken des Betriebsschalters kann wieder ein Gewinde geformt werden.

In einer Ausführungsform stoppt bei einer vordefinierten Gewindelänge ein Stopper, insbesondere ein verstellbarer Stopper, das weitere Schneiden des Gewindes, wobei der Stopper mechanisch das Drehmoment für ein weiteres Drehen des Gewindeschneiders erhöht.

Soll ein Gewinde mit einer vordefinierten Gewindelänge z.B. in einer Durchgangsbohrung geformt werden, so kann die Erhöhung des Drehmoments, um daraus das Erreichen eines Drehrichtungsumkehrwerts zu ermitteln, z.B. durch einen Stopper erreicht werden, der am Werkstück bei Erreichen der vordefinierten Gewindelänge zur Anlage kommt, sodass ein weiteres Gewindeschneiden oder Drehen des Gewindeschneiders ein erheblich höheres Drehmoment benötigen würde, da das weitere Eindringen des Gewindeschneiders in das Werkstück mechanisch blockiert wird.

In einer Ausführungsform wird das Bestimmen des Drehmoments, das Ermitteln eines Erreichens eines Drehrichtungsumkehrwertes aus dem Drehmoment und/oder das Ändern der ersten Drehrichtung in die zweite Drehrichtung nach Erreichen des Drehrichtungsumkehrwertes durch eine oder mehrere elektronische Steuerungen vorgenommen.

Für das Verfahren zum Gewindeformen können eine oder mehrere Steuerungen, z.B. mit einem Mikroprozessor und einem Speicher, eingesetzt werden. Zum Bestimmen des Drehmoments, dem Ermitteln des Erreichens eines Drehrichtungsumkehrwertes aus dem Drehmoment und das Ändern der ersten Drehrichtung in die zweite Drehrichtung nach Erreichen des Drehrichtungsumkehrwertes kann z.B. eine elektronische Steuerung eingesetzt werden. Die Steuerungen können dazu Sensoreingänge und/oder Steuerungsausgänge, einen Mikroprozessor und einen Speicher aufweisen. Über die Sensoreingänge könne z.B. Messdaten zur Bestimmung des Drehmoments, mit dem der Gewindeschneider gedreht wird, der Steuerung zur Verfügung gestellt werden. Mit dem Mikroprozessor kann ermittelt werden, ob ein Drehrichtungsumkehrwert erreicht wurde. Über einen Steuerungsausgang kann die Phasensequenz des Elektromotors geändert werden.

Vorgeschlagen wird zudem ein Elektrowerkzeug zum Gewindeformen. Das Elektrowerkzeug kann insbesondere für das beschriebene Verfahren zum Gewindeformen eingesetzt werden. Das Elektrowerkzeug umfasst: einen Elektromotor; eine Aufnahme dazu eingerichtet Gewindeschneider aufzunehmen; eine Drehmomentbestimmungseinrichtung zur Bestimmung eines Drehmoments das auf die Aufnahme und/oder durch den Elektromotor ausgeübt wird; eine Drehrichtungsumkehrwertermittlungsvorrichtung zur Ermittlung eines Erreichens eines Drehrichtungsumkehrwerts aus dem Drehmoment; und eine Drehrichtungsänderungseinrichtung dazu eingerichtet die Drehrichtung der Aufnahme und/oder des Elektromotors nach Erreichen eines Drehrichtungsumkehrwertes zu ändern.

Das Elektrowerkzeug kann z.B. eine Bohrmaschine, ein Bohrschrauber oder eine Gewindebohrmaschine sein. Das Elektrowerkzeug kann netz- oder akkubetrieben sein. Das Gewindeformen kann als eine zusätzliche Funktion oder Betriebsart bei einem Elektrowerkzeug implementiert sein. Z.B. kann ein Akkubohrschrauber zusätzlich zu den Betriebsarten Bohren und Schrauben die Betriebsart Gewindeformen aufweisen.

Der Elektromotor kann ein Elektromotor mit Rotor und Stator sein. Der Elektromotor kann ein bürstenloser oder bürstenbehafteter Motor sein.

Bei der Aufnahme, die dazu eingerichtet ist einen Gewindeschneider aufzunehmen, kann es sich um ein Spannfutter handeln. Das Spannfutter kann unterschiedliche Werkzeugeinsätze wie Bohrer, Schraubeinsätze und Gewindeschneider wie Gewindebohrer und Schneideisen aufnehmen.

Mit der Drehmomentbestimmungseinrichtung kann das Drehmoment, das auf die Aufnahme ausgeübt wird, und/oder das Drehmoment, das durch den Elektromotor ausgeübt wird, bestimmt werden.

In einem Antriebsstrang vom Elektromotor zur Aufnahme kann an einer Welle, die die Aufnahme dreht, ein Drehmomentsensor angeordnet sein. Z.B. kann das Drehmoment durch Magnetostriktion oder Magnetoelastizität bestimmt werden. Die Veränderungen eines Magnetfeldes in einem ferromagnetischen Material bei Krafteinwirkung werden dabei von einer Sensorelektronik erfasst und ausgewertet.

Es kann auch das Drehmoment, das der Elektromotor ausübt, bestimmt werden. Übersetzungen und Einstellungen eines Getriebes können dann durch die Drehmomentbestimmungseinrichtung mitberücksichtigt werden. Das Drehmoment des Elektromotors ist durch eine Stromstärke für eine Anregung des Elektromotors, insbesondere zusammen mit den Kennlinien des Elektromotors, zugänglich.

Mit der Drehrichtungsumkehrwertermittlungsvorrichtung kann ermittelt werden, ob ein Drehrichtungsumkehrwert erreicht ist. Dies kann z.B. der Fall sein, wenn die Stromstärke für den Elektromotor einen Schwellwert überschreitet oder der Anstieg der Stromstärke einen Anstiegsschwellwert überschreitet. Die Drehrichtungsumkehrwertermittlungsvorrichtung kann mit Hilfe einer Steuerung, z.B. mit einem Mikroprozessor und einem Speicher realisiert werden. Die Steuerung kann einen oder mehrere Sensoreingänge und Steuerungsausgänge umfassen.

Die Drehrichtungsänderungseinrichtung ist dazu eingerichtet die Drehrichtung der Aufnahme und/oder des Elektromotors nach Erreichen eines Drehrichtungsumkehrwertes zu ändern. Die Drehrichtung der Aufnahme kann z.B. durch das Umschalten eines Getriebes mit einem Steller durch eine elektronische Steuerung vorgenommen werden. Die Drehrichtung der Aufnahme kann auch am Elektromotor vorgenommen werden. Eine elektronische Steuerung kann die Phasensequenz oder die Stromrichtung am Elektromotor ändern und so die Drehrichtung des Elektromotors ändern.

In einer Ausführungsform hat das Elektrowerkzeug einen in der Aufnahme aufgenommenen Gewindeschneider, insbesondere einen Gewindebohrer zum Schneiden eines Innengewindes oder ein Schneideisen zum Schneiden eines Außengewindes. Je nach Werkstück, an dem ein Gewinde geformt werden soll, z.B. als Innen- oder Außengewinde, können verschiedene Gewindeschneider, z.B. Gewindebohrer oder Schneideisen zum Einsatz kommen. Als Gewindebohrer kann z.B. ein Einschnittgewindebohrer eingesetzt werden. Ein Einschnittgewindebohrer kann insbesondere bei einer Vielzahl von gleichartigen Gewinden zum Formen eingesetzt werden. Es können auch Gewindeschneidsätze eingesetzt werden.

In einer Ausführungsform weist das Elektrowerkzeug einen, insbesondere verstellbaren, Stopper zur Einstellung einer Gewindelänge auf. Ein Stopper kann zur Einstellung der Gewindelänge beim Formen eines Gewindes mit dem Elektrowerkzeug eingesetzt werden. Ein verstellbarer Stopper ermöglicht die Einstellung verschiedener Gewindelängen.

In einer Ausführungsform ist der Stopper am Gehäuse des Elektrowerkzeugs, an der Aufnahme und/oder am Gewindeschneider angeordnet. Für die Positionierung des Stoppers gibt es unterschiedliche Möglichkeiten. Der Stopper soll so ausgeführt sein, dass das Drehmoment für ein weiteres Drehen des Gewindeschneiders beim Erreichen der gewünschten Länge des Gewindes ansteigt.

In einer Ausführungsform umfassen die Drehmomentbestimmungseinrichtung, die Drehrichtungsumkehrwertermittlungsvorrichtung und/oder die Drehrichtungsänderungseinrichtung eine oder mehrere elektronische Steuerungen. Mit Hilfe von Steuerungen, z.B. mit einem Mikroprozessor und einem Speicher können die Drehmomentbestimmungseinrichtung, die Drehrichtungsumkehrwertermittlungsvorrichtung und/oder die Drehrichtungsänderungseinrichtung realisiert werden. Die Drehrichtungsänderungseinrichtung ist dazu eingerichtet die Drehrichtung automatisch nach Erreichen des Drehrichtungsumkehrwerts zu ändern, d.h. ohne einen Eingriff des Bedieners. Die Steuerungen können einen oder mehrere Sensoreingänge und Steuerungsausgänge umfassen.

Die für das vorgeschlagene Verfahren beschriebenen Ausführungsformen und Merkmale gelten für die vorgeschlagene Vorrichtung entsprechend, wie auch die für die vorgeschlagene Vorrichtung beschriebenen Ausführungsformen und Merkmale für das vorgeschlagene Verfahren entsprechend gelten.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: schematische Seitenansicht auf ein Elektrowerkzeug;
- Fig. 2 a bis d: Vorgang des Gewindeformens zu verschiedenen Zeitpunkten;
- Fig. 3: schematische Darstellung einer Drehmomentkurve beim Gewindeformen in Abhängigkeit des Drehwinkels;
- Fig. 4: schematische Darstellung eines Verfahrensablaufs zum Gewindeformen;
- Fig. 5: schematische Darstellung des Formens eines Außengewindes; und
- Fig. 6: schematische Darstellung eines Gewindeformens in einem Sackloch.

In den Figuren sind gleiche oder funktionsgleiche Elemente mit denselben Bezugszeichen versehen worden, sofern nichts anderes angegeben ist.

### AUSFÜHRUNGSFORMEN DER ERFINDUNG

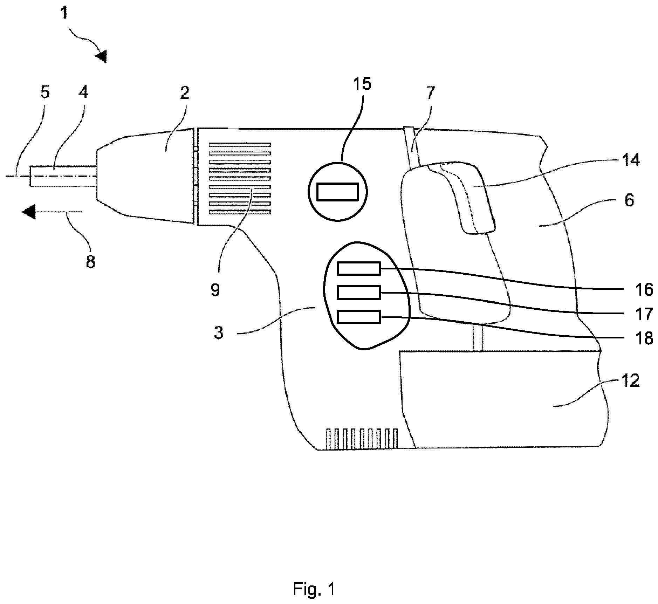

In Fig. 1 ist ein Elektrowerkzeug 1, am Beispiel eines Akkubohrers, gemäß einer Ausführungsform schematisch mit teilweise entferntem Gehäuse 3 dargestellt. Das Elektrowerkzeug 1 hat eine Aufnahme in Form eines Spannfutters 2, das im Bereich einer Vorderseite des Gehäuses 3 befestigt ist. Das Spannfutter 2 nimmt einen Werkzeugeinsatz 4 entlang einer Hauptachse 5 lösbar auf. Der Werkzeugeinsatz 4 kann ein Bohrer, ein Gewindeschneider, insbesondere ein Gewindebohrer 20 oder ein Schneideisen 28, oder ein anderer bekannter Werkzeugeinsatz 4 sein. Ein Bediener wählt einen für eine Arbeit geeigneten Werkzeugeinsatz 4 aus und wechselt den Werkzeugeinsatz 4 im Spannfutter 2 entsprechend. Das Spannfutter 2 kann das Lösen eines montierten Werkzeugeinsatzes 4 durch manuelles Drücken, Ziehen oder Drehen des Spannfutters 2 relativ zum Gehäuse 3 ermöglichen, ohne dass ein Schlüssel oder ein anderes Werkzeug benötigt wird. Das Spannfutter 2 kann automatisch in einen eingesetzten Werkzeugeinsatz 4 verriegelnd eingreifen, oder es kann ein manuelles Schieben, Ziehen oder Drehen des Spannfutters 2 für einen verriegelnden Eingriff mit dem Werkzeugeinsatz 4 erfordern.

Das Elektrowerkzeug 1 hat einen Handgriff 6, der im hinteren Bereich des Gehäuses 3 angebracht ist. Der Bediener kann das Elektrowerkzeug 1 während seiner Arbeit halten und führen. Der beispielhafte Handgriff 6 ist schräg, nahezu senkrecht, zur Hauptachse 5 angeordnet. Der Bediener kann durch Drücken gegen den Handgriff 6 ergonomisch eine Kraft auf den Werkzeugeinsatz 4 ausüben. Der Handgriff 6 kann über flexible Verbindungsstücke 7 teilweise vom Gehäuse 3 entkoppelt werden. Die Verbindungsstücke 7 können ein federähnliches Element enthalten, z. B. eine Feder oder ein Gummipolster. Der Bediener kann das Verbindungsstück 7 in Vorschubrichtung 8 zusammendrücken, um eine Schubkraft aufzubringen. Schwingungen des Elektrowerkzeugs 1 entlang der Hauptachse 5 werden durch das Verbindungsstück 7 gedämpft. Das Elektrowerkzeug 1 kann einen zweiten Griff haben, der in der Nähe des Spannfutters 2 angeordnet ist.

Das Elektrowerkzeug 1 hat einen Elektromotor im Inneren des Gehäuses 3. In einer Ausführungsform ist der Motor ein Elektromotor mit einem Rotor und einem Stator. Der Motor kann ein bürstenloser oder bürstenbehafteter Motor sein. Der Elektromotor kann von einem Akkupack 12 gespeist werden. Der Akkupack 12 kann eine oder mehrere Batteriezellen auf der Basis einer Li-lonen-Zellchemie oder anderen chemischen Zellen enthalten. Die Zellen können zylindrisch geformt sein. Der Akkupack 12 ist lösbar am Gehäuse 3 befestigt. In einer anderen Ausführungsform verfügt das Elektrowerkzeug 1 über einen Stecker für ein Stromnetz.

Ein Betriebsschalter 14 ist am Gehäuse 3 oder am Handgriff 6 angeordnet. Der Betriebsschalter 14 kann so am Handgriff 6 angeordnet sein, dass der Bediener den Handgriff 6 halten und gleichzeitig den Betriebsschalter 14 drücken kann. Mit dem Betriebsschalter 14 wird das Elektrowerkzeug 1 aktiviert. Der Betriebsschalter 14 hat einen "Ein"-Zustand (gestrichelte Linien in Fig. 1 a) zum Aktivieren des Elektrowerkzeugs 1 und einen "Aus"-Zustand (durchgezogene Linie) bei dem das Elektrowerkzeug 1 deaktiviert ist. Der Betriebsschalter 14 ist funktionell mit dem Elektromotor verbunden. Im Zustand "Ein" wird der Elektromotor mit Strom versorgt. Der Rotor übt ein Drehmoment auf den Stator aus, was zu einer Drehung des Rotors führt. Im "Aus"-Zustand ist der Elektromotor nicht angetrieben. Der Betriebsschalter 14 kann ein Druckschalter sein, der nur im "Aus"-Zustand stabil ist, d. h. der Betriebsschalter 14 kehrt von selbst in den "Aus"-Zustand zurück, wenn der Bediener den Betriebsschalter 14 loslässt. Der Betriebsschalter 14 kann eine Feder enthalten, die den Betriebsschalter 14 in den "Aus"-Auslösezustand drückt.

Das Spannfutter 2 des Elektrowerkzeugs 1 ist drehbar am Gehäuse 3 angebracht. Das Spannfutter 2 kann durch den Elektromotor angetrieben werden. Der Antrieb kann durch einen Antriebsstrang mit einem Zahnradgetriebe erfolgen. An einem Betriebsartenwahlschalter 15 können Betriebsarten wie Bohren, Schrauben oder Gewindeformen eingestellt werden. An weiteren, in Fig. 1 nicht dargestellten, Schaltern können die Drehrichtung oder eine Drehmomentbegrenzung manuell eingestellt werden. Ist am Betriebsartenwahlschalter 15 die Betriebsart Gewindeformen eingestellt, so kann das Elektrowerkzeug 1 ein automatisiertes Verfahren zum Gewindeformen bereitstellen, bei dem aus Drehmomentwerten eine Änderung der Drehrichtung des Elektrowerkzeugs 1 folgt, sodass ein Gewinde 24 geschnitten und ein Gewindeschneider 20, 28 von einem Werkstück 21 anschließend wieder entfernt wird.

Das Elektrowerkzeug 1 hat eine Drehmomentbestimmungseinrichtung 16. Die Drehmomentbestimmungseinrichtung 16 umfasst einen Mikroprozessor mit Speicher, Sensoreingängen und Datenausgängen. Die Drehmomentbestimmungseinrichtung 16 kann den vom Elektromotor des Elektrowerkzeugs 1 aufgenommenen Strom messen, die Umdrehungen des Elektromotors pro Zeiteinheit und eine Getriebestellung eines Getriebes des Elektrowerkzeugs 1. Mit Hilfe einer hinterlegten Kennlinie des Elektromotors 1 kann die Drehmomentbestimmungseinrichtung 16 das Drehmoment M mit dem ein Werkzeugeinsatz 4, z.B. ein Gewindebohrer 20, angetrieben wird, bestimmen. In Ausführungsformen kann auch der Strom zum Antrieb des Elektromotors als Maß für das Drehmoment dienen.

Die Drehmomentwerte der Drehmomentbestimmungseinrichtung 16 können einer Drehrichtungsumkehrwertermittlungsvorrichtung 17 zur Verfügung gestellt werden. Die Drehrichtungsumkehrwertermittlungsvorrichtung 17 kann denselben Mikroprozessor wie die Drehmomentbestimmungseinrichtung 16 nutzen. Die Drehrichtungsumkehrwertermittlungsvorrichtung 17 kann das Überschreiten eines Drehmomentschwellwerts 26 ermitteln. Ist der Drehmomentschwellwert 26 überschritten, so kann die Drehrichtungsumkehrwertermittlungsvorrichtung 17 ein Signal an eine Drehrichtungsänderungseinrichtung 18 senden. Wird z.B. der Strom zum Antrieb des Elektromotors als Maß für das Drehmoment verwendet, so kann bei einem Leerlaufstrom des Elektromotors von etwa 6 bis 7 A bei einer Spannung von 22 V ein Drehmomentschwellwert von 15 A definiert sein. Nimmt der Elektromotor einen Strom von mehr als 15 A auf, so wird ein Signal an die Drehrichtungsänderungseinrichtung 18 gesendet. Die Bestimmung des Drehmoments und/oder die Ermittlung, ob ein Drehrichtungsumkehrwert erreicht ist, kann z.B. mit einer Samplingrate bzw. Abtastrate von 1 kHz vorgenommen werden.

Die Drehrichtungsänderungseinrichtung 18 kann die Phasensequenz des Elektromotors 1 derart ändern, dass sich eine Drehrichtung des Elektromotors 1 ändert und sich hierdurch die Drehrichtung DR des Werkzeugeinsatzes 4 ändert. Alternativ kann die Drehrichtungsänderungseinrichtung 18 auch mit Hilfe eines Aktuators eine Getriebestellung so ändern, dass sich die Drehrichtung DR des Werkzeugeinsatzes 4 in ändert.

Drehmomentbestimmungseinrichtung 16, Drehrichtungsumkehrwertermittlungsvorrichtung 17 und Drehrichtungsänderungseinrichtung 18 können sich einer gemeinsamen elektronischen Steuerung, insbesondere mit einem gemeinsamen Mikroprozessor, bedienen.

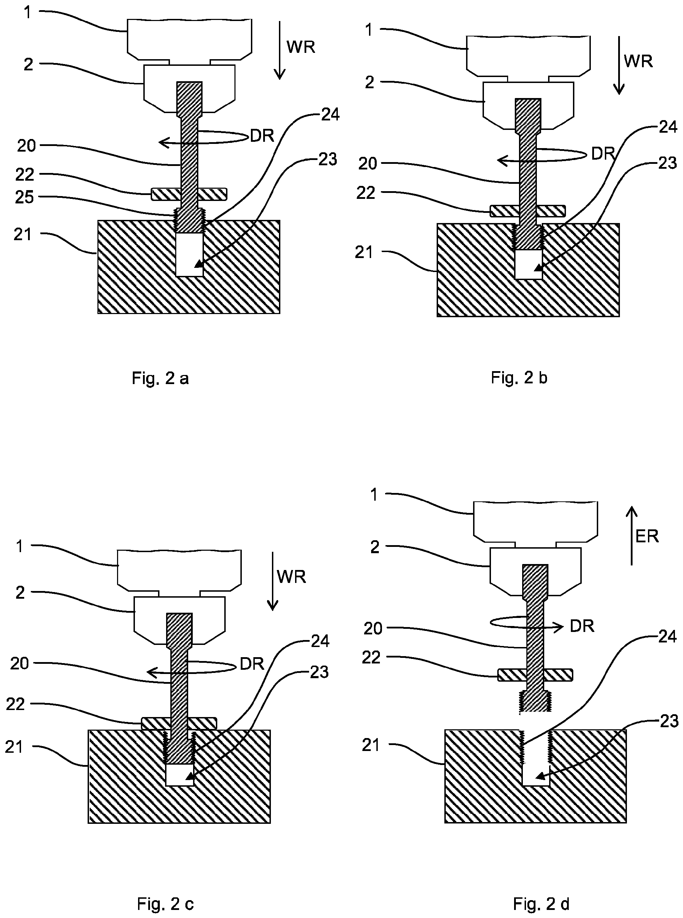

In den Fig. 2 a bis d ist ein Verfahren zum Gewindeformen zu verschiedenen Zeitpunkten schematisch dargestellt. An einem teilweise dargestellten Elektrowerkzeug 1, z.B. einem Akkubohrschrauber, ist ein Spannfutter 2 als Aufnahme für einen Werkzeugeinsatz 4, in den Fig. 2 a bis d einem Gewindebohrer 20, angeordnet. Am Gewindebohrer 20 ist ein Stopper 22 angeordnet. Der Stopper 22 kann axial entlang des Gewindebohrers 20 verstellbar sein und z.B. über eine Rastfunktion oder ein Gewinde am Stopper und eine Kontermutter fixierbar sein.

In Fig. 2 a wird das Elektrowerkzeug 1 mit dem Gewindebohrer 20 an einem Werkstück 21 mit einem Sackloch 23 angesetzt und dreht sich in eine erste Drehrichtung DR, z.B. mit Blickrichtung auf das Werkstück, der Werkstückrichtung WR, im Uhrzeigersinn, um ein Rechtsgewinde zu formen. Wenn der Gewindebohrer 20 angefangen hat, das Gewinde 24 zu schneiden, so zieht der Gewindebohrer 20 das Elektrowerkzeug 1 in die Werkstückrichtung WR.

In Fig. 2 b ist dargestellt, dass Schneiden 25 des Gewindebohrers 20 vollständig im Werkstück 21 eingeschraubt sind.

In Fig. 2 c ist dargestellt, wie der Stopper 22 mit dem Werkstück 21 in Kontakt kommt, sodass ein weiterer Vortrieb des Elektrowerkzeugs 1 in Werkstückrichtung WR nicht mehr möglich ist.

In Fig. 2 d ist dargestellt, wie der Gewindebohrer 20 in ein zweite Drehrichtung DR gedreht wird. Solange die Schneiden 25 des Gewindebohrers 20 noch in Kontakt mit dem geschnittenen Gewinde 24 sind, wird das Elektrowerkzeug 1 bei Drehung des Gewindebohrers 20 in die zweite Drehrichtung DR in Elektrowerkzeugrichtung ER aus dem Werkstück 21 herausgeschoben.

Die Abfolge, der in den Fig. 2 a bis d dargestellten Situationen, kann durch ein Drücken des Betriebsschalters 14 ohne Loslassen des Betriebsschalters 14 erreicht werden. Nach Entfernen des Gewindebohrers kann ein Bediener den Betriebsschalter 14 dann wieder loslassen und das Elektrowerkzeug 1 wird zurückgesetzt, sodass das erneute Gewindeformen durch erneutes Drücken des Betriebsschalters 14 ermöglicht wird.

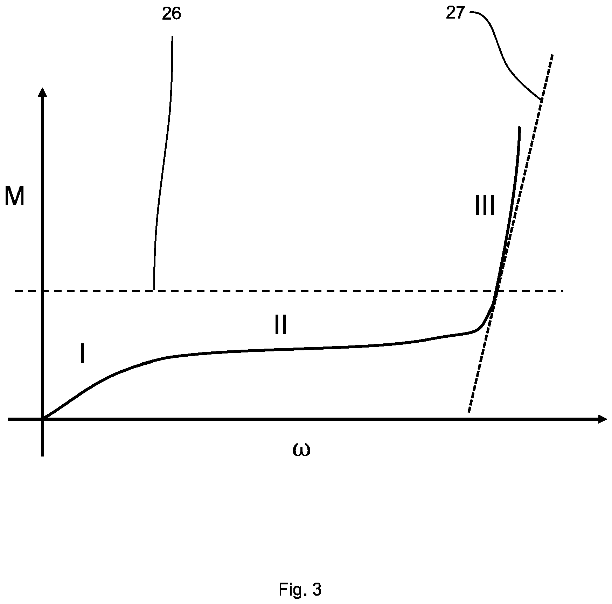

In Fig. 3 ist schematisch eine Drehmomentkurve bei einer voreingestellten Drehzahl dargestellt, bei der das Drehmoment M in Abhängigkeit vom Drehwinkel ω beim Schneiden des Gewindes 24 aufgetragen ist. In einem ersten Bereich I, der in etwa der Situation aus Fig. 2 a entspricht, nimmt das Drehmoment M mit den Umdrehungen ω des Gewindebohrers 20 zu während die Schneiden 25 des Gewindebohrers 20 in das Werkstück 21 eindringen. Im Bereich II, der in etwa der Situation aus Fig. 2 b zugeordnet werden kann, sind die Schneiden 25 des Gewindebohrers 20 vollständig im Werkstück, das Drehmoment M nimmt nun weniger stark zu, der Abtransport von Spänen aus dem Loch kann aber z.B. eine weitere Zunahme des Drehmoments M bewirken. Im Dritten Bereich III nimmt das Drehmoment M schlagartig zu, wenn der Stopper 22 mit dem Werkstück 21 in Kontakt kommt, dies entspricht der Situation in Fig. 2 c. Die voreingestellte Drehzahl kann dann auch nicht mehr erreicht werden. Eine elektronische oder eine mechanische Rutschkupplung kann dann greifen.

Mit der Drehmomentbestimmungseinrichtung 16 wird das Drehmoment während des Schneidens des Gewindes 24 bestimmt. Die Drehrichtungsumkehrwertermittlungsvorrichtung 17 ermittelt, wenn ein vordefinierter Drehmomentschwellwert 26 überschritten wird. Alternativ kann die Drehrichtungsumkehrwertermittlungsvorrichtung 17 auch ein Überschreiten eines Anstiegsschwellwerts 27 ermitteln. Nach dem Überschreiten des Drehmomentschwellwerts 26 oder des Anstiegsschwellwerts 27 kann die Drehrichtungsänderungseinrichtung 18 die Änderung der Drehrichtung DR des Gewindebohrers 20 bewirken.

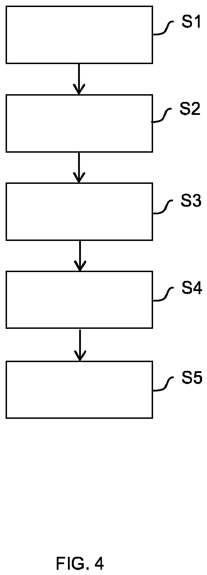

Fig. 4 stellt schematisch einen Ablauf eines Verfahrens zum Gewindeformen dar. Im Schritt S1 wird ein Gewinde 24 geschnitten. Hierzu wird ein Gewindeschneider 20, 28 mit einem Elektromotor in eine erste Drehrichtung DR gedreht, die Anzahl der Umdrehungen pro Zeiteinheit des Gewindeschneiders 20, 28 kann hierzu eingestellt werden. Beim Gewindeschneider 20, 28 kann es sich um einen Gewindebohrer 20 für Innengewinde oder ein Schneideisen 28 für Außengewinde handeln. Während das Gewinde 24 geschnitten wird, wird im Schritt S2 mit einer Drehmomentbestimmungseinrichtung 16 das Drehmoment bestimmt. Die Bestimmung des Drehmoments kann z.B. an der Welle, die den Gewindeschneider 20, 28 antreibt, mit Hilfe eins Drehmomentsensors vorgenommen werden. Alternativ kann das Drehmoment aus der Leistungsaufnahme des Elektromotors, insbesondere der Stromaufnahme des Elektromotors, und der Anzahl der Umdrehungen pro Zeiteinheit des Gewindeschneiders 20, 28 bestimmt werden. Im Schritt S3 wird das Erreichen eines Drehrichtungsumkehrwerts mit einer Drehrichtungsumkehrwertermittlungsvorrichtung 17 ermittelt. Hierzu kann das bestimmte Drehmoment mit einem Drehmomentschwellwert 26 verglichen werden. Alternativ oder auch in Kombination zum Drehmomentschwellwert 26 kann ermittelt werden, ob der Anstiegsschwellwert 27 des Drehmoments überschritten wird. Mit einer Drehrichtungsänderungseinrichtung 18 wird in einem Schritt S4 die Drehrichtung DR von der ersten Drehrichtung zum Schneiden des Gewindes 24 in eine zweite, zur ersten Drehrichtung DR entgegengesetzten Drehrichtung DR geändert. Die Änderung der Drehrichtung kann z.B. durch Umkehrung der Stromrichtung des Elektromotors erzeugt werden. In einem Schritt S5 wird der Gewindeschneider 20, 28 mit dem Elektromotor in die zweite Drehrichtung zum Entfernen des Gewindeschneiders 20, 28 von dem Werkstück 21 gedreht. Durch die Drehung in die zweite Drehrichtung DR wird der Gewindeschneider 20 aus dem Werkstück 21 herausgeschraubt und dabei das Elektrowerkzeug 1 vom Werkstück 21 wegbewegt.

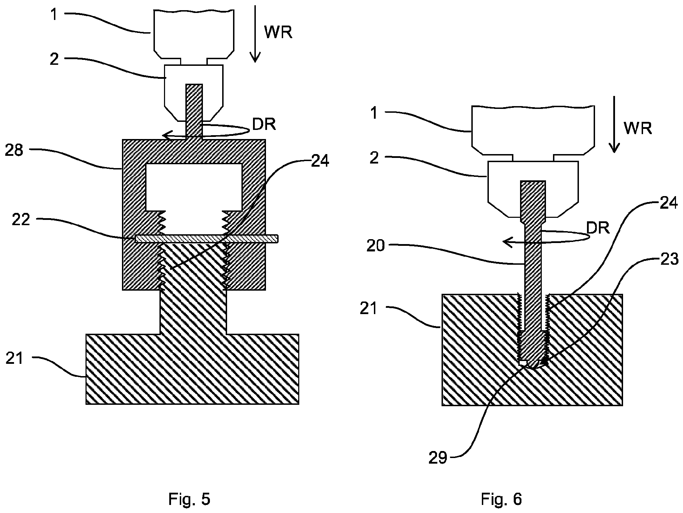

Fig. 5 zeigt schematisch eine Ausführungsform bei der ein Gewinde 24 als Außengewinde an einem Werkstück 21 geformt wird. Anstelle des Gewindebohrers 20 wird ein Schneideisen 28 als Gewindeschneider 20, 28 eingesetzt. Im Schneideisen 28 kann ein Stopper 22 zu Einstellung einer Gewindelänge angeordnet sein. Der Stopper 22 kann verstellbar ausgeführt sein, z.B. kann eine Platte als Stopper 22 in unterschiedlichen Höhen im Schneideisen 28 eingesteckt sein.

Fig. 6 zeigt schematisch eine Ausführungsform, bei der ein Gewinde 24 in einem Sackloch 23 ohne einen verstellbaren Stopper 22 geformt wird. Ein Gewindebohrer 20 weist hierzu einen Fortsatz 29 auf, der mit dem Sacklochgrund in Kontakt kommen kann und dann ein Ansteigen eines Drehmoments zur Folge hat.

Obwohl die vorliegende Erfindung anhand von Ausführungsbeispielen beschrieben wurde, ist sie vielfältig modifizierbar.

### BEZUGSZEICHENLISTE

- 1: Elektrowerkzeug
- 2: Spannfutter
- 3: Gehäuse
- 4: Werkzeugeinsatz
- 5: Hauptachse
- 6: Handgriff
- 7: flexible Verbindungsstücke
- 8: Vorschubrichtung
- 9: Lüftungsöffnungen
- 12: Akkupack
- 14: Betriebsschalter
- 15: Betriebsartenwahlschalter
- 16: Drehmomentbestimmungseinrichtung
- 17: Drehrichtungsumkehrwertermittlungsvorrichtung
- 18: Drehrichtungsänderungseinrichtung
- 20: Gewindebohrer
- 21: Werkstück
- 22: Stopper
- 23: Loch
- 24: Gewinde
- 25: Schneiden des Gewindebohrers
- 26: Drehmomentschwellwert
- 27: Anstiegsschwellwert
- 28: Schneideisen
- 29: Fortsatz

- DR: Drehrichtung
- WR: Werkstückrichtung
- ER: Elektrowerkzeugrichtung
- I, II, III: Bereiche der Drehmomentkurve
- S2 bis S5: Verfahrensschritte

## Patentansprüche

1. Verfahren zum Gewindeformen mit einem Elektrowerkzeug (1) umfassend folgende Schritte:
- Schneiden (S1) eines Gewindes (24) an einem Werkstück (21) durch Drehen eines Gewindeschneiders (20, 28) mit einem Elektromotor in eine erste Drehrichtung (DR),
- Bestimmen (S2) eines Drehmoments, das auf den Gewindeschneider (20, 28) ausgeübt wird,
- Ermitteln (S3) eines Erreichens eines Drehrichtungsumkehrwertes aus dem Drehmoment,
- Ändern (S4) der ersten Drehrichtung (DR) in eine zweite, zur ersten Drehrichtung (DR) entgegengesetzte, Drehrichtung (DR) nach Erreichen des Drehrichtungsumkehrwertes, und
- Drehen (S5) des Gewindeschneiders (20, 28) mit dem Elektromotor in die zweite Drehrichtung (DR) zum Entfernen des Gewindeschneiders (20, 28) von dem Werkstück (21).

2. Verfahren nach Anspruch 1, wobei für das Bestimmen des Drehmoments eine Stromstärke eines den Elektromotor anregenden Stroms und/oder eine Anzahl von Umdrehungen pro Zeiteinheit des Gewindeschneiders (20, 28) bestimmt werden.

3. Verfahren nach einem der vorhergehenden Ansprüche, wobei für die Bestimmung der Umdrehungen pro Zeiteinheit des Gewindeschneiders (20, 28) eine Stellung eines Getriebes, insbesondere mit einem Hallsensor, Umdrehungen pro Zeiteinheit einer den Gewindeschneider (20, 28) antreibenden Welle, insbesondere mit einem Hallsensor, und/oder Umdrehungen pro Zeiteinheit des Elektromotors, insbesondere mit einem Hallsensor, gemessen werden.

4. Verfahren nach einem der vorhergehenden Ansprüche, wobei das Erreichen des Drehrichtungsumkehrwertes aus einem Überschreiten eines Drehmomentschwellwerts (26) für das Drehmoment, das auf den Gewindeschneider (20, 28) ausgeübt wird, ermittelt wird.

5. Verfahren nach einem der vorhergehenden Ansprüche, wobei das Erreichen des Drehmomentumkehrwertes aus einem Überschreiten eines Anstiegsschwellwerts (27) eines zeitlichen und/oder drehwinkelabhängigen Ansteigens des Drehmoments ermittelt wird.

6. Verfahren nach einem der vorhergehenden Ansprüche, wobei das Ändern der ersten Drehrichtung (DR) in die zweite Drehrichtung (DR) durch eine Änderung einer Stromrichtung am Elektromotor, eine Änderung einer Phasensequenz am Elektromotor oder eine Getriebeumschaltung erfolgt.

7. Verfahren nach einem der vorhergehenden Ansprüche, wobei nach einem Ausschalten des Elektrowerkzeugs (1), insbesondere nach einem Loslassen und/oder Freigeben eines Betriebsschalters (14), der Elektromotor sich bei erneutem Einschalten des Elektrowerkzeugs (1) wieder in die erste Drehrichtung (DR) dreht.

8. Verfahren nach einem der vorhergehenden Ansprüche, wobei bei einer vordefinierten Gewindelänge ein Stopper (22), insbesondere ein verstellbarer Stopper (22), das weitere Schneiden des Gewindes (24) stoppt, wobei der Stopper (22) mechanisch das Drehmoment für ein weiteres Drehen des Gewindeschneiders (20, 28) erhöht.

9. Verfahren nach einem der vorhergehenden Ansprüche, wobei das Bestimmen des Drehmoments, das Ermitteln des Erreichens des Drehrichtungsumkehrwertes aus dem Drehmoment und/oder das Ändern der ersten Drehrichtung (DR) in die zweite Drehrichtung (DR) nach Erreichen des Drehrichtungsumkehrwertes durch eine oder mehrere elektronische Steuerungen vorgenommen werden.

10. Elektrowerkzeug (1) zum Gewindeformen, insbesondere zum Gewindeformen nach einem der Ansprüche 1 bis 9, umfassend:
- einen Elektromotor,
- eine Aufnahme (2), die dazu eingerichtet ist, Gewindeschneider (20, 28) aufzunehmen,
- eine Drehmomentbestimmungseinrichtung (16) zur Bestimmung eines Drehmoments, das auf die Aufnahme (2) und/oder durch den Elektromotor ausgeübt wird,
- eine Drehrichtungsumkehrwertermittlungsvorrichtung (17) zur Ermittlung eines Erreichens eines Drehrichtungsumkehrwerts aus dem Drehmoment, und
- eine Drehrichtungsänderungseinrichtung (18), die dazu eingerichtet ist, die Drehrichtung (DR) der Aufnahme (2) und/oder des Elektromotors nach Erreichen eines Drehrichtungsumkehrwertes zu ändern.

11. Elektrowerkzeug (1) nach Anspruch 10, mit einem in der Aufnahme (2) aufgenommenen Gewindeschneider (20, 28), insbesondere einem Gewindebohrer (20) zum Schneiden eines Innengewindes (24) oder einem Schneideisen (28) zum Schneiden eines Außengewindes (24).

12. Elektrowerkzeug (1) nach einem der Ansprüche 10 oder 11, wobei das Elektrowerkzeug (1) einen, insbesondere verstellbaren, Stopper (22) zur Einstellung einer Gewindelänge aufweist.

13. Elektrowerkzeug (1) nach Anspruch 12, wobei der Stopper (22) am Gehäuse des Elektrowerkzeugs (1), an der Aufnahme (2) und/oder am Gewindeschneider (20, 28) angeordnet ist.

14. Elektrowerkzeug (1) nach einem der Ansprüche 10 bis 13, wobei die Drehmomentbestimmungseinrichtung (16), die Drehrichtungsumkehrwertermittlungsvorrichtung (17) und/oder die Drehrichtungsänderungseinrichtung (18) eine oder mehrere elektronische Steuerungen umfassen.

15. Computerprogrammprodukt, umfassend Befehle, die bei der Ausführung des Programms durch einen Computer diesen veranlassen, das Verfahren nach einem der Ansprüche 1 - 9 auszuführen.
